# EUROPEAN PATENT SPECIFICATION

(11) **EP 3 244 161 B1**
(45) Date of publication and mention of the grant of the patent: **19.12.2018**
(21) Application number: 16461522.1
(22) Date of filing: 10.05.2016
(51) Int. Cl.: G01B 11/25, G01M 17/013

(54) **CONTACTLESS MEASUREMENT SYSTEM FOR ROAD VEHICLE WHEELS**
KONTAKTLOSES MESSSYSTEM FÜR STRASSENFAHRZEUGRÄDER
SYSTÈME DE MESURE SANS CONTACT POUR ROUES DE VÉHICULES ROUTIERS

(43) Date of publication of application: 15.11.2017
(73) Proprietor: MW Lublin SP. z o.o., 20-209 Lublin (PL)
(72) Inventor: KALIFA, Alain, F-95540 MERY SUR OISE (FR); GODIN, Anthony, F-02300 CAILLOUEL-CREPIGNY (FR); PERRIS MAGNETTO, Gabriele, 10098 RIVOLI (Torino) (IT)
(74) Representative: Vanzini, Christian

(56) References cited:
- WO-A1-2010/071657
- US-A1- 2008 297 777
- Iso: "Road - vehicles - Wheels - Measurement of radial and lateral run-out", , 15 February 2006 (2006-02-15), pages 1-14, XP055314859, Switzerland Retrieved from the Internet: URL:http://hsevi.ir/RI_Standard/File/3626 [retrieved on 2016-10-28]

## Description

The present invention relates to methods for measuring radial and lateral run-out in road vehicle wheels.

Rim seat run-out measurement methodology is precisely defined in the ISO 16833 norm, currently applied by all vehicle wheel users and manufacturers.

Key points defined in this norm are the following:
- For each rim seat, the measurements are defined by the contact points, over a wheel revolution, of a sphere while maintaining continuous contact on the seat and against the rim flange of the wheel
- Distances X and Y are defined respectively by contact point on seat and rim flange
- If not specified on wheel drawing, sphere diameter is 8 mm +/- 0,2
- At least 128 points should be considered for each measurement definition (internal seat RRO, internal seat LRO, external seat RRO, external seat LRO).

Calculation processes are defined in the norm to obtain different measurements (average, peak to peak, harmonics...), and calculated values have to be compared with acceptable thresholds depending wheel specifications and drawing definition.

All existing machines are built with mechanical principles exactly copying ISO 16833 definitions. A 16mm diameter sphere is applied on both wheel seats with a constant force. The axial and radial displacement of both spheres are measured at least 128 times during one full rotation of the wheel: by construction, those machines are basically compliant with ISO 16833 norm.

Each machine supplier has his own mechanical construction to fulfil the norm requirements, with variable mechanical complexity:
- On each wheel side, a 16 mm diameter sphere is set in contact with the wheel.
- This sphere is mechanically linked with high precision mechanisms to measure its displacement along the x- and y-directions.

By the way, the main problem of the existing machines is that the above described mechanisms require constant cares and effective maintenance to keep good machine capability, in accordance with customer acceptable values: this problem is a constant difficulty in the manufacturing systems. Considering customer requirement trends to reduce those run-out acceptable values, machine capability is even more and more difficult and costly to maintain.

As mechanical construction creates the above described problems, it is desired to replace the existing mechanisms by a contactless measurement system positioned to acquire profiles on each seat area.

2D contactless measurement systems are known, which are based on the triangulation principle. They are able to acquire 2D profiles obtained by intersection of a plane surface generally set as perpendicular to the object surface to be measured. Practically, these systems are generally associating a vertical laser line and a CCD camera acquiring points from the line projection deformation on the surface to be measured. Precise measurement based on the obtained profile can be done by those systems.

Alternatively, some systems associated with a specific software reconstruct 3D models by successive acquisitions of a big quantity of profiles during a wheel rotation; the final measurement is however obtained by a section of the 3D model and sphere centre position is defined through a 2D section defined by the plan passing by the sphere centre and the wheel revolution axis.

All measurement system manufacturers propose measurement advanced function but none can fulfil ISO 16833 requirements. As the norm specifies to use a sphere, the measurement should be done through a volumetric device, where the contactless measurement system only provide a 2D profile.

Moreover, available systems can propose measurement function along x- or y-dimension, but nothing similar to the norm requirement, i.e. managing two contact points at the same time. As rim seat surface and flange surface are not perpendicular, a sphere displacement along the x-axis has always a correlated movement along the y-axis due to the angle between said surfaces and the dual contact requirement. As existing measurement systems provide independent measurements along x- and y-axis, they do not comply with ISO 16833 norm.

Furthermore, the contactless measurement systems provide measurement results intrinsically different from the classical mechanical system because contactless measurement basically works in 2D, whereas the sphere as defined in the norm is a 3D volume which is in continuous contact with the rim seat and rim flange.

For example, US 2008/0297777 A1 and WO 2010/071657 A1 disclose optical measurements on rims or wheels.

One object of the present invention is to provide a contactless method for measuring radial and lateral run-out which can obtain results in accordance with ISO 16833 norm, with similar results as those obtained by traditional mechanical measurement systems, but without inconveniences considering that there are no fragile mechanical parts in the measurement chain, and no mechanical parts wear.

This object is achieved according to the invention by a method for measuring radial and lateral run-out in a road vehicle wheel, said wheel having a wheel rim with inner and outer rim seats, as well as inner and outer rim flanges, wherein the method comprises
- providing surface profile data related to the wheel rim, said data being obtained through optical scanning;
- identifying a plurality of angular positions with respect to a wheel rotation axis;
- for each angular position, and for each rim seat:
   a) determining a measured rim profile from said surface profile data,
   b) calculating a simulated circle of radius R which is in contact with the measured rim profile at a first contact point located on the rim seat and at a second contact point located on the rim flange, and
   c) calculating a radial position of the first contact point and a lateral position of the second contact point,
- for each rim seat, determining a radial run-out measurement curve from the radial positions of the first contact points calculated over one revolution of the wheel and a lateral run-out measurement curve from the lateral positions of the second contact points calculated over one revolution of the wheel, and
- smoothing the radial run-out measurement curve and the lateral run-out measurement curve by means of signal filtering.

The present invention solves the above described problems and complies with ISO 16833 requirements by using a standard contactless measurement system in association with a signal treatment process which correlates the measurements along the y-axis with the measurements along the x-axis, and further smoothes the measurements by means of signal filtering. In this way, the continuous contact between sphere and rim seat/rim flange required by the conventional mechanical methodology is simulated via software means.

Preferred embodiments of the invention are defined in the dependent claims, which are to be understood as forming an integral part of the present description.

A further object of the present invention is a computer program product directly loadable into the internal memory of a digital computer comprising software code portions for performing the method of the invention when said product is run on a computer.

Further characteristic features and advantages of the method according to the invention will become clear from the following detailed description of an embodiment of the invention provided with reference to the accompanying drawings and provided purely by way of a non-limiting example in which:
- Figure 1 is a flowchart representing a measurement method according to the invention,
- Figures 2 is a perspective view showing optical scanning of a wheel rim, and
- Figure 3 is a sketch illustrating the principle of the measurement method according to the invention.

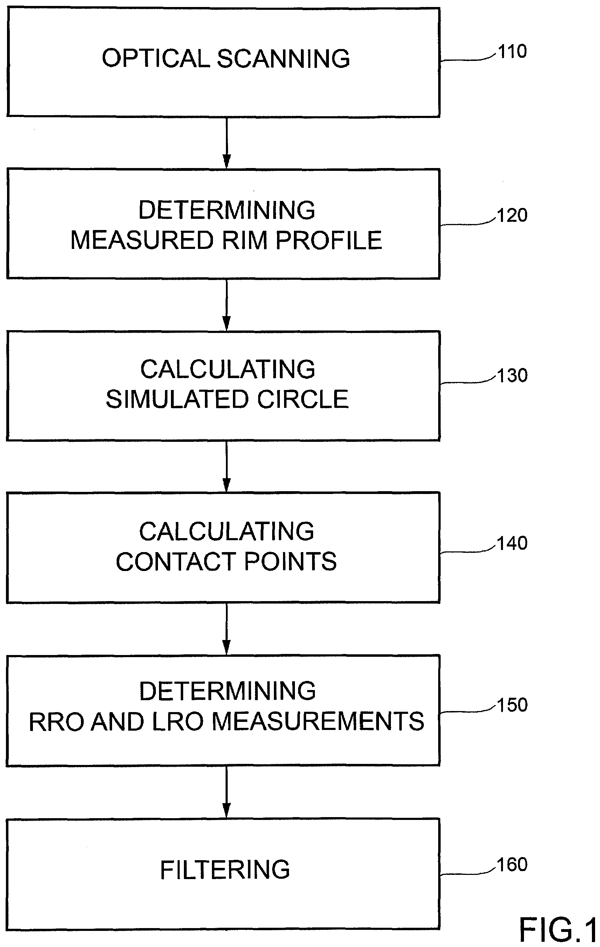

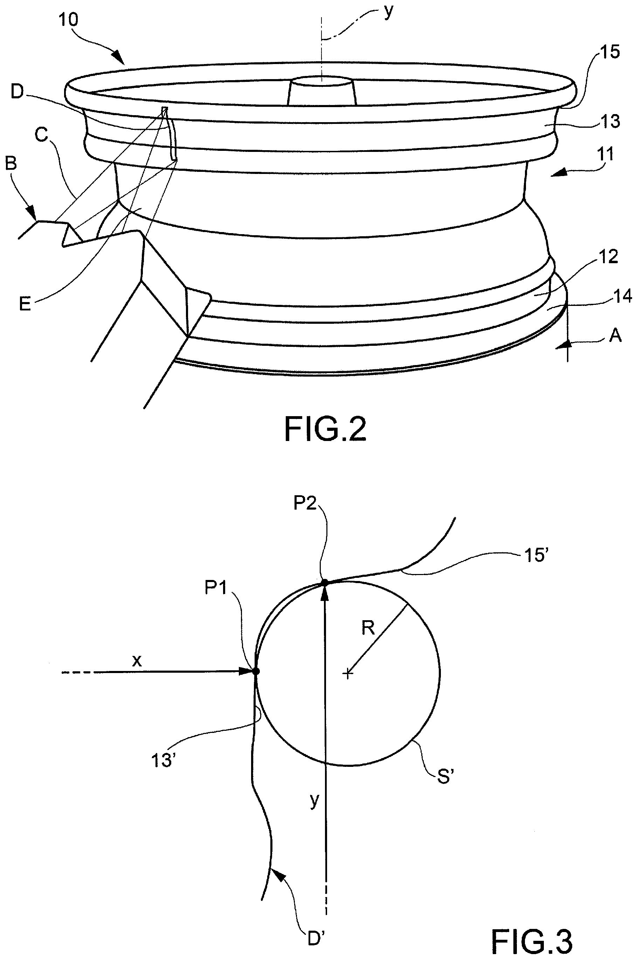

Referring to Fig. 1, a measurement method according to the invention comprises a step 110 of contactless, particularly optical scanning to measure the surface profile of a wheel rim. Fig. 2 shows an exemplary set-up of an apparatus for performing optical scanning of the wheel rim. Such an apparatus comprises a rotating support A. The rotating support A is operatively connected to a motor (not shown) which drives the support A to rotate around a rotating axis y. A wheel 10 is positioned and secured to the support A in such a way as its centre hole axis (or its pitch circle axis defined by the implantation of the fasteners' nut seats) is made to coincide with the rotation axis y.

Also shown in Fig. 2 is a wheel rim 11 comprising inner and outer rim seats 12, 13, as well as inner and outer rim flanges 14, 15. Here, the spatial terms "inner" and "outer" are referred to a condition in which the wheel 10 is installed on a vehicle.

The measurement apparatus of Fig. 2 further comprises an optical scanning sensor B interfaced to a computer via a controller. The sensor B can be a standard scanning laser triangulation sensor which uses the laser triangulation principle for two-dimensional profile detection on different target surface. By using special lenses, a laser beam is enlarged to form a static laser line and is projected onto the target surface. In Fig. 2 a single linear scan area on the rim surface is designated as D; as shown, the linear scan area D extends in the lateral/axial direction of the wheel 10 (vertical direction in Fig. 2). A high quality optical system projects the diffusely reflected light (E) of this laser line onto a highly sensitive sensor matrix. In addition to distance information, the controller also uses this camera image to calculate the position along the laser line. These measured values are then output in a two-dimensional coordinate system that is fixed with respect to the sensor.

The rotation movement of the wheel 10 is synchronized with the scanning measurement; therefore, a plurality of linear scans of the wheel rim surface are made at respective fixed angular positions with respect to the wheel rotation axis y. Measurements in the fixed sensor coordinate system is then transformed to coordinates in the wheel coordinate system. Each rim seat and corresponding rim flange are therefore digitized in form of a dense cloud of point data.

Alternatively, a sensor for three-dimensional profile detection may be used.

The data related to the wheel rim 11 can optionally be used to reconstruct a 3D model of the wheel rim surface.

The surface profile data obtained through the scanning process are used for determining a plurality of measured rim profiles defined at respective angular positions with respect to the wheel rotation axis y, and for each rim seat 12, 13 (step 120 in Figure 1). These angular positions are at least 128 angular positions equally distributed over one revolution of the wheel 10. According to an embodiment of the invention, the measured rim profiles are directly obtained from the surface profile data; in other words, each measured rim profile is acquired through one of the linear scans performed by the optical scanning sensor. According to an alternative embodiment in which the surface profile data are used to reconstruct a 3D model of the wheel rim, each measured rim profile is obtained as a radial section through the 3D model at a respective, fixed angular position.

Then, for each angular position, and for each rim seat 12, 13 a simulated circle of fixed radius R, which is in contact with the measured rim profile at a first contact point located on the rim seat and at a second contact point located on the rim flange, is calculated (step 130). The radius R is equal to 8 mm unless otherwise requested. In Figure 3 the measured rim profile is designated as D', whereas the rim seat portion of the measured rim profile is designated as 13' and the rim flange portion of the measured rim profile is designated as 15'. The simulated circle is designated as S'. The first contact point is designated as PI, whereas the second contact point is designated as P2.

For each angular position, and for each rim seat 12, 13 a radial position of the first contact point P1 and a lateral position of the second contact point P2 are calculated (step 140). In Figure 3 the radial position of the first contact point P1 is designated as X, whereas the lateral/axial position of the second contact point P2 is designated as Y. The radial position X is calculated as the distance of the first contact point P1 relative to the wheel rotation axis y. The axial position Y is calculated as the distance of the second contact point P2 relative to a fixed reference plane perpendicular to the wheel rotation axis y, as defined by ISO 16833.

Therefore, for each rim seat 12, 13 a radial run-out measurement (RRO) is determined as a curve formed by the radial positions X of the first contact points P1 calculated over one revolution of the wheel, and a lateral run-out measurement (LRO) is determined as a curve formed by the lateral positions Y of the second contact points P2 calculated over one revolution of the wheel (step 150).

Then, the radial run-out measurement and the lateral run-out measurement are smoothed by means of signal filtering (step 160), in order to obtain comparable measures between the conventional mechanical measurement system using a physical 3D sphere and a contactless measurement system according to the invention. For instance, a standard spline filtering process gives good result but other filtering processes can be used. In some respect, the filtering process acts on the measurement signals in a similar way as the mechanical sphere measurement where a natural smoothing is applied by pressure applied through the sphere.

## Claims

1. A method for measuring radial and lateral run-out in a road vehicle wheel (10), said wheel having a wheel rim (11) with inner and outer rim seats (12, 13), as well as inner and outer rim flanges (14, 15), wherein the method comprises
- providing surface profile data related to the wheel rim (11), said data being obtained through optical scanning;
- identifying a plurality of angular positions with respect to a wheel rotation axis (y);
- for each angular position, and for each rim seat (12, 13):
a) determining a measured rim profile (D') from said surface profile data,
b) calculating a simulated circle (S') of fixed radius R which is in contact with the measured rim profile (D') at a first contact point (P1) located on a rim seat (13') and at a second contact point (P2) located on a flange (15') of the measured rim profile (D'), and
c) calculating a radial position (X) of the first contact point (P1) and a lateral position (Y) of the second contact point (P2),
- for each rim seat (12, 13), determining a radial run-out measurement curve from the radial positions (X) of the first contact points (P1) calculated over one revolution of the wheel (10) and a lateral run-out measurement curve from the lateral positions (Y) of the second contact points (P2) calculated over one revolution of the wheel (10), and
- smoothing the radial run-out measurement curve and the lateral run-out measurement curve by means of signal filtering.

2. A method according to claim 1, wherein said plurality of angular positions are at least 128 angular positions equally distributed over one revolution of the wheel (10).

3. A method according to claim 1 or 2, wherein said surface profile data consist of data that are obtained through a plurality of linear scans (D) of a wheel rim surface, each linear scan being performed in a lateral direction of the wheel rim (11) and at a fixed angular position with respect to the wheel rotation axis (y), and wherein each measured rim profile (D') is acquired through one of the linear scans (D).

4. A method according to claim 1 or 2, wherein said surface profile data consist of data that are obtained through a 3D model of a wheel rim surface created from a plurality of scans of a wheel rim surface, and wherein each measured rim profile (D') is defined as a radial section through the 3D model at a fixed angular position.

5. A computer program product directly loadable into the internal memory of a digital computer comprising software code portions for performing the steps of any one of the preceding claims when said product is run on a computer.

## Patentansprüche

1. Verfahren zum Messen des Radial- und Seitenschlags eines Straßenfahrzeugrades (10), wobei das Rad eine Radfelge (11) mit einem inneren und äußeren Felgensitz (12, 13) aufweist, sowie einen inneren und äußeren Felgenflansch (14, 15), wobei das Verfahren aufweist
Bereitstellen von Oberflächenprofildaten, die die Radfelge (11) betreffen, wobei die Daten durch optisches Abtasten erlangt werden;
Identifizieren einer Mehrzahl von Winkelpositionen bezüglich einer Raddrehachse (y); für jede Winkelposition und für jeden Felgensitz (12, 13):
a) Bestimmen eines gemessenen Felgenprofils (D') aus den Oberflächenprofildaten,
b) Berechnen eines simulierten Kreises (S') mit festem Radius R, der mit dem gemessenen Felgenprofil (D') an einem ersten Kontaktpunkt (P1), der sich auf einem Felgensitz (13') befindet, und an einem zweiten Kontaktpunkt (P2), der sich auf einem Flansch (15') des gemessenen Felgenprofils (D') befindet, in Kontakt ist, und
c) Berechnen einer radialen Position (X) des ersten Kontaktpunkts (P1) und einer Seitenposition (Y) des zweiten Kontaktpunkts (P2),
für jeden Felgensitz (12, 13), Bestimmen einer Radialschlagkurve für die radialen Positionen (X) der ersten Kontaktpunkte (P1), die über eine Umdrehung des Rades (10) berechnet werden, und einer Seitenschlagmesskurve für die Seitenpositionen (Y) der zweiten Kontaktpunkte (P2), die über einer Umdrehung des Rades (10) berechnet werden, und
Glätten der Radialschlagmesskurve und der Seitenschlagmesskurve mittels Signalfilterung.

2. Verfahren nach Anspruch 1, bei dem die Mehrzahl der Winkelpositionen mindestens 128 Winkelpositionen aufweist, die über eine Umdrehung des Rades (10) gleichmäßig verteilt sind.

3. Verfahren nach Anspruch 1 oder 2, bei dem die Oberflächenprofildaten Daten aufweisen, die durch eine Mehrzahl von linearen Abtastungen (D) einer Radfelgenoberfläche erlangt werden, wobei jede lineare Abtastung in einer Seitenrichtung der Radfelge (11) und an einer festen Winkelposition bezüglich der Raddrehachse (y) durchgeführt wird, und jedes gemessene Felgenprofil (D') durch eine der linearen Abtastungen (D) erfasst wird.

4. Verfahren nach Anspruch 1 oder 2, bei dem die Oberflächenprofildaten Daten aufweisen, die durch ein 3D-Modell einer Radfelgenoberfläche erlangt werden, das erzeugt wird aus einer Mehrzahl von Abtastungen einer Radfelgenoberfläche, und bei dem jedes gemessene Felgenprofil (D') als ein radialer Abschnitt durch das 3D-Modell an einer festen Winkelposition definiert ist.

5. Computerprogrammprodukt, das direkt in einen internen Speicher eines digitalen Computers ladbar ist, mit Softwarecodebereichen zum Durchführen der Schritte gemäß einem der vorangegangenen Ansprüche, wenn das Produkt auf einem Computer läuft.

## Revendications

1. Procédé de mesure de l'écart radial et latéral d'une roue (10) d'un véhicule routier, la roue ayant une jante de roue (11) avec des sièges de jante intérieur et extérieur (12, 13) ainsi que des rebords de jante intérieur et extérieur (14, 15), le procédé comprenant :
- mettre à disposition des données de profil de surface concernant la jante de roue (11), les données étant obtenues par balayage optique,
- identifier une pluralité de positions angulaires par rapport à un axe de rotation de roue (y),
- pour chaque position angulaire et pour chaque siège de jante (12, 13) :
a) déterminer un profil de jante mesuré (D') des données de profil de surface,
b) calculer un cercle simulé (S') d'un rayon R fixe qui est en contact avec le profil de jante mesuré (D') à un premier point de contact (P1) situé sur un siège de jante (13') et à un deuxième point de contact (P2) situé sur un rebord (15') du profil de jante mesuré (D'), et
c) calculer une position radiale (X) du premier point de contact (P1) et une position latérale (Y) du deuxième point de contact (P2),
- pour chaque siège de jante (12, 13), déterminer une courbe de mesure de l'écart radial à partir des positions radiales (X) des premiers points de contact (P1) calculées pour un tour de la roue (10) et une courbe de mesure de l'écart latéral à partir des positions latérales (Y) des deuxièmes points de contact (P2) calculées pour un tour de la roue (10), et
- lisser la courbe de mesure de l'écart radial et la courbe de mesure de l'écart latéral à l'aide d'un filtrage de signaux.

2. Procédé selon la revendication 1, **caractérisé en ce que** la pluralité de positions angulaires sont au moins 128 positions angulaires uniformément réparties sur un tour de la roue (10).

3. Procédé selon la revendication 1 ou 2, **caractérisé en ce que** les données de profil de surface sont constituées de données qui ont été obtenues par une pluralité de balayages linéaires (D) de la surface de jante de roue, chaque balayage linéaire étant effectué dans une direction latérale de la jante de roue (11) et à une position angulaire fixe par rapport à l'axe de rotation de roue (y), et **en ce que** chaque profil de jante mesuré (D') est obtenu par un des balayages linéaires (D).

4. Procédé selon la revendication 1 ou 2, **caractérisé en ce que** les données de profil de surface sont constituées de données qui ont été obtenues par un modèle en 3D d'une surface de jante de roue engendré à partir d'une pluralité de balayages d'une surface de jante de roue, et **en ce que** chaque profil de jante mesuré (D') est définie comme une coupe radiale par le modèle en 3D à une position angulaire fixe.

5. Produit de programme d'ordinateur adapté pour être chargé directement dans la mémoire interne d'un ordinateur digital comprenant des parties de codes de logiciels pour mettre en oeuvre les étapes de l'une quelconque des revendications précédentes lorsque le produit fonctionne sur un ordinateur.
